Europäisches Patentamt

European Patent Office

Office européen des brevets

(11) Publication number: **0 311 066 B1**

## EUROPEAN PATENT SPECIFICATION

(45) Date of publication of patent specification: **01.07.92**

(51) Int. Cl.5: **B01J 29/06**, B01J 29/34, B01D 53/36

(21) Application number: **88116539.3**

(22) Date of filing: **06.10.88**

(54) **Process for the production of copper-containing zeolite and the method of application thereof.**

(30) Priority: **07.10.87 JP 251614/87**
**07.10.87 JP 251615/87**
**07.10.87 JP 251616/87**

(43) Date of publication of application:
**12.04.89 Bulletin 89/15**

(45) Publication of the grant of the patent:
**01.07.92 Bulletin 92/27**

(84) Designated Contracting States:
**DE FR GB IT**

(56) References cited:
**EP-A- 0 186 398**
**EP-A- 0 286 507**
**US-A- 4 297 328**

**CHEMIE-INGENIEUR-TECHNIK, vol. 55, no. 2, February 1985, pages 148-149, Verlag Chemie GmbH, Weinheim, DE; E. HÄFELE et al.: "Versuche zur Konvertierung von Wassergas an Zeolith-Katalysatoren"**

(73) Proprietor: **Tosoh Corporation**
**4560, Kaisei-cho**
**Shinnanyo-shi, Yamaguchi-ken(JP)**

(72) Inventor: **Kamiyama, Katsumi**
**10, Oaza Setomi-cho**
**Tokuyama-shi Yamaguchi-ken(JP)**
Inventor: **Igawa, Kazushige**
**1-29-8, Daijin**
**Shinnanyo-shi Yamaguchi-ken(JP)**

(74) Representative: **Vossius & Partner**
**Siebertstrasse 4 P.O. Box 86 07 67**
**W-8000 München 86(DE)**

## Description

The present invention relates to the production of catalysts and adsorbents to be used in the fields of petroleum chemistry, purification of petroleum and prevention of environmental pollution. Particularly this invention relates to the production of catalysts and to a method to use them to remove nitrogen oxides (hereinafter designated in an abbreviated form as NOx) from gases containing NOx which are exhausted from industrial plants and automobiles, etc. More particularly, this invention intends to offer a process for producing catalysts for the direct catalytic decomposition of NOx and a method of application thereof.

NOx in the combustion exhaust gases from industrial plants and automobiles may cause photochemical smog and therefore the development of methods to prevent the smog is a serious and urgent social demand from the environmental safety.

We have both dry and wet methods to remove NOx. In the wet methods, nitrogen compounds contained in the exhaust liquids containing absorbed NOx are difficult to treat and therefore wet methods are still not of practical use. Of the dry methods, however. there are known methods of non-catalytic reduction, direct catalytic decomposition, selective catalytic reduction, and adsorption. Among the dry methods, the selective $NH_3$ catalytic reduction method is already under practical application. However, this process requires $NH_3$ as reducing agent, and further devices for recovery or decomposition of unreacted $NH_3$, thus leading to a more complicated process.

The method of direct catalytic decomposition of NOx is most preferred, since it involves the most simple process and does not require a reducing agent such as $NH_3$. Hitherto a number of investigations have been performed on the direct catalytic decomposition reaction of NOx and Pt, CuO and $Co_3O_4$ are known to exhibit catalytic activity in decomposing NOx, but the activity remains insufficient due to the poisoning action of the decomposition product oxygen. Thus, they could not be used in practice.

Recently, a zeolite (ZSM-5) which contains copper ions and has a specific crystalline structure has been found to act as a decomposition catalyst for NO (JP-A-60-125250) in the direct catalytic decomposition of NOx which does not suffer from poisoning action of moisture and oxygen even if they are present in the gas to be treated. The ZSM-5 containing copper appearing in the cited reference is prepared from plain ZSM-5 by treating it for ion exchange in an aqueous solution of a water soluble divalent copper salt.

There are a large number of reports on ZSM-5 containing copper. In JP-A-54-96500, for example, the ZSM-5 containing copper which is prepared form ZSM-5 by the ion exchange conducted several times with an aqueous solution of a water soluble divalent copper salt is described to be used as a catalytic combustion catalyst.

In JP-A-57-36015 and US-A-4,297,328, the ZSM-5 which is ion exchanged three times with an aqueous solution of copper(II) chloride at a refluxing temperature to obtain a rate of exchanged copper ions of larger than 160% can be used as combustion catalyst and as ternary catalyst, respectively.

However, as long as the usual ion exchange method is employed, exchange of a large amount of copper is not possible in a single run, but several repeated runs of exchange procedure are needed.

Indeed, the ZSM-5 containing copper which evidences activity in the direct catalytic decomposition reaction of NO could be prepared by the process described in prior literature. But the ion exchange carried out as described in the literature does not give a sufficient amount of copper ions in a single run and repeated runs are necessary, and therefore several repeated procedures of ion exchange are needed to obtain a larger amount of exchanged copper and to attain the high activity for the decomposition of NO.

Starting from the mentioned situation, the present inventors examined in detail the production of ZSM-5 containing copper and the direct catalytic decomposition reaction of NOx using the ZSM-5 containing copper.

As a result, the inventors found that, if the ion exchange with copper ions is carried out in an aqueous solution containing ammonia, a single run of ion exchange sufficed to obtain a high rate of exchanged copper ions. Further more, they found that the copper-containing zeolite catalysts which were prepared by the method just mentioned exhibited higher activity for decomposing NO than the ZSM-5 containing copper which was prepared by an existing method.

The present invention offers a process for producing a copper-containing zeolite, comprising : subjecting a zeolite having the lattice spacings (d values) indicated in Table 1 as estimated by the powder X-ray diffraction to ion exchange with copper ions in an aqueous solution containing a water soluble copper salt and ammonia; and a process for decomposing nitrogen oxides with the copper-containing zeolite as catalyst.

The present invention will be described in more detail hereinbelow.

The zeolite as the basic material of the catalyst of this invention is required to hold the lattice spacings (d values) indicated in Table 1, but may be prepared in any method without restriction.

2

Table 1

| Lattice spacing (d value) | Relative strength | Lattice spacing (d value) | Relative strength |
|---|---|---|---|
| 11.1 ± 0.3 | strong | 4.60 ± 0.08 | weak |
| 10.0 ± 0.3 | strong | 4.25 ± 0.08 | weak |
| 7.4 ± 0.2 | weak | 3.85 ± 0.07 | very strong |
| 7.1 ± 0.2 | weak | 3.71 ± 0.05 | strong |
| 6.3 ± 0.2 | weak | 3.04 ± 0.03 | weak |
| 6.04 ± 0.2 | weak | 2.99 ± 0.02 | weak |
| 5.56 ± 0.1 | weak | 2.94 ± 0.02 | weak |
| 5.01 ± 0.1 | weak | | |

Preferably, the ratio in moles of $SiO_2$ to $Al_2O_3$ of the zeolite to be used in this invention is 15 to 300, more preferably 20 to 200. The zeolite as basic material of catalysts having the lattice spacings (d values) as indicated in Table 1 has almost no activity to decompose NOx, if it is used without further treatment.

The copper-containing zeolite of this invention can be prepared from the zeolite having the lattice spacings (d values) as indicated in Table 1 either by exchanging cations in the zeolite with copper ions in an aqueous solution containing a water soluble copper salt and ammonia, or by supplying ammonia gas to be adsorbed on the zeolite in which cations have been exchanged with copper ions.

Following is an explanation of the method where copper ions are exchanged with cations of the zeolite in the presence of ammonia.

Any copper salt may be used so long as it is a water soluble salt. Salts applicable are, for example, sulfate, chloride, acetate, nitrate and others of copper. On the other hand, ammonia may be applied in the form of ammonia water, hydrous ammonia compounds, and aqueous solutions containing dissolved ammonia. The ammonia may be added in any unrestricted amount, but preferably in such an amount that the pH of a slurry containing the zeolite be in the range from 4 to 12. When the pH is less than 4, the exchange of ions hardly occurs because of too low speed of exchange of ions. For the pH exceeding 12, impurity copper is deposited and therefore the activity of decomposing NOx is lowered. The concentration of copper ions in the aqueous solution may be set arbitrarily according to the required rate of exchanged copper ions of the zeolite.

The copper ions in the form of $Cu^+$, $Cu^{2+}$, $CuOH^+$, and $[Cu(NH_3)_4]^{2+}$ exchange with cations of the zeolite. A part of the zeolite is also turned into the $NH_4$-type on account of the presence of a large excess of $NH_3$ molecules.

In the above method of preparation, a rate of exchanged copper ions greater than 100 % and an $NH_3$ content of more than 0.2 molecules per unit Cu atom can be achieved with the product obtained by a single exchange procedure.

The product produced by the ion exchange is washed with water and dried, to obtain the copper-containing zeolite catalyst.

The copper content of the copper-containing zeolite, though a higher value is favoured, is preferably larger than 0.03 %, more preferably larger than 1 %, by weight. The larger the copper content of the copper-containing zeolite, the higher the decomposition activity for NOx.

The copper-containing zeolite catalysts also exhibit high activities as reductive denitration catalysts for NOx.

The ratio in moles of $SiO_2$ to $Al_2O_3$ of the copper-containing zeolite is substantially the same as that of the original zeolite. Also the crystalline structure of the copper-containing zeolite remains unchanged through the ion exchange treatment and therefore can be characterized by the lattice spacings (d values) indicated in Table 1.

The $NH_3$ content of the copper-containing zeolite catalyst was determined by the neutralization titration for the analysis of ammonia ("Handbook for Analytical Chemistry", 1971, Maruzen, Tokyo). Outline of the procedure is as follows: a solution of NaOH is added to a sample of the catalyst, $NH_3$ is liberated by distillation and absorbed in a known excess of a standard solution of acid where the excess of acid is determined by back titration with a standard solution of NaOH.

The reason why the copper-containing zeolites prepared according to the present invention exhibit such a high activity in the catalytic decomposition of NOx is still not clear, but presumably the ammonia molecules captured on the zeolite together with the copper ions are liberated in the pretreatment stage of the catalytic decomposition reaction of NOx, and partially reduce the $Cu^{2+}$ into $Cu^{+}$ which forms an active site for the catalytic decomposition reaction of NOx. The smoothness in the oxidation-reduction process, $Cu^{+} \rightleftharpoons Cu^{2+}$, is perhaps decisive in maintaining the high activity.

On the other hand, there is found a description in JP-A-54-96500 and 57-36015 that the copper after the ion exchange treatment exists in the form of $CuOH^{+}$ and is changed to $Cu^{+}$ at temperatures approximately above 300°C.

However, the copper-containing ZSM-5 prepared according to the method of the cited reference showed lower activity for decomposing NOx than the copper-containing zeolite catalysts of the present invention.

The reason why the copper-containing zeolite catalysts of the present invention have a higher activity is presumably due to the presence of $Cu^{+}$ which is formed when the ammonia molecules coordinating to copper ions are liberated in the pretreatment stage. This $Cu^{+}$ may be considered to be different in the degree of reduction and others from the $Cu^{+}$ formed via $CuOH^{+}$, thus leading to the difference in the activity for decomposing NOx.

In short, the copper-containing zeolite catalysts prepared by the method of this invention with their specific crystalline structure are highly active even at low temperatures as a result of the combined effect of structural stability and thermal resistance, free from influences of oxygen and moisture as decomposition products, and are stationarily stable.

In the decomposition reaction using the copper-containing zeolite catalysts, time of contact of the gases to be treated with the catalysts is not particularly restricted. In accordance with the components and their concentrations of a gas to be treated, the best set of the ratio in moles of $SiO_2$ to $Al_2O_3$ and the rate of exchanged copper ions can be selected. In combined use of these factors, temperature of the reaction and time of contact of the gas with the catalyst can be set so that the decomposition activity together with other characteristics of the catalyst can be exhibited to the highest degree.

The temperature at which the copper-containing zeolite catalysts are used as a decomposition catalyst for NOx is in the range from 200 to 1000°C, preferably from 300 to 700°C.

The copper-containing zeolite catalysts prepared in the present invention can be used as catalyst and also as adsorbent in petroleum chemistry, purification of petroleum and prevention of environmental pollution, and further, among the fields of above applications, they exhibit particularly excellent activity in decomposing NOx, when they are used as catalyst for decomposing and removing NOx from a gas containing nitrogen oxides.

The copper-containing zeolite catalysts of the present invention may also be supplied in the form of moldings which are shaped using such binders as clay minerals.

In another aspect of this invention, a zeolite molding which is shaped beforehand is submitted to exchange with copper ions in an aqueous solution containing a water soluble copper salt and ammonia. Dimensions of the moldings are not particularly restricted.

The zeolite moldings as the basic material of the catalysts of this invention are required to hold the lattice spacings (d values) indicated in Table 1, but may be prepared in any method without any restriction. The zeolite is granulated using clay as binder such as kaolin, attapulgite, montmorillonite, bentonite, allophane, and sepiolite. Five to thirty parts of these binders are used to 100 parts of zeolite. Otherwise,

4

EP 0 311 066 B1

moldings called binderless moldings, may be prepared directly from zeolite itself without using any binder.

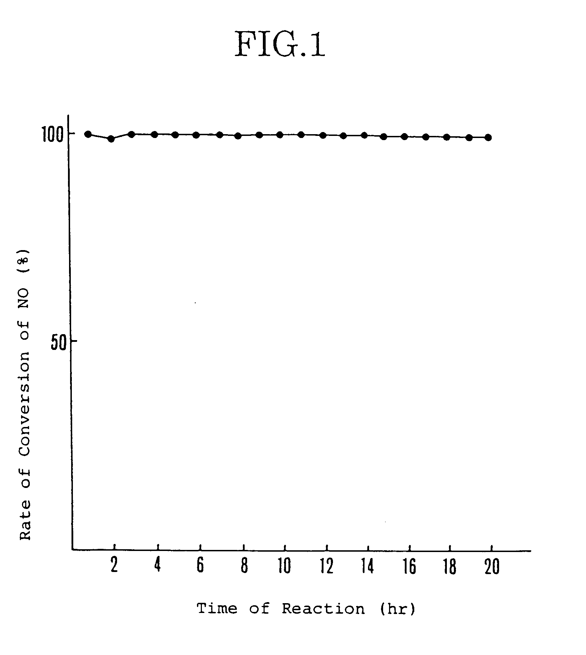

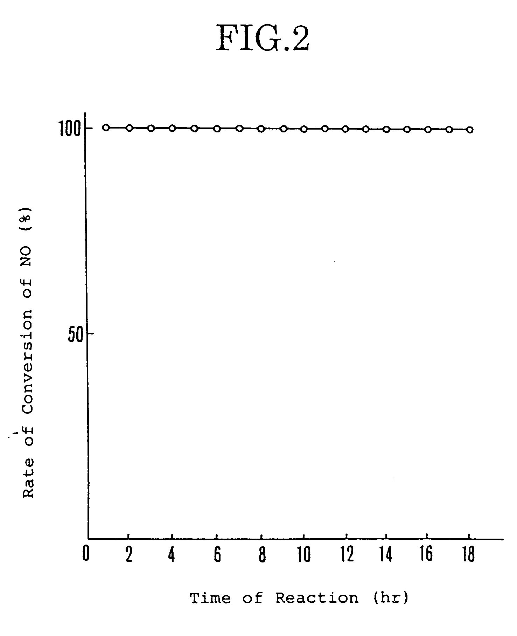

Figs. 1 and 2 show the time variation of the rate of conversion of NO in Examples 6 and 10, respectively.

More details will be illustrated below using examples and comparison examples with reference to the accompanying drawings.

Example 1 (Synthesis of zeolite)

Into an overflow type reaction tank of a 2 liter net capacity which is under agitation, aqueous solutions of sodium silicate ($SiO_2$; 153.4 g/l, $Na_2O$; 49.9 g/l, $Al_2O_3$; 0.8 g/l) and aluminum sulfate together with sulfuric acid ($Al_2O_3$; 38.4 g/l, $H_2SO_4$; 275.4 g/l) were supplied continuously in a speed of 3.2 1/hr and 0.8 1/hr, respectively. Temperature of the reaction was 30 to 32°C and pH of the slurry was 6.4 to 6.6. Solid matter was separated with a centrifuge from the slurry produced, thoroughly washed with water, to obtain a homogeneous and amorphous aluminosilicate compound in fine particles ($Na_2O$; 1.72 wt%, $Al_2O_3$; 2.58 wt%, $SiO_2$; 39.3 wt%, $H_2O$; 56.4 wt%). This homogeneous compound (2840 g) and an aqueous solution of NaOH (1.39 wt%, 5160 g) were placed in an autoclave of 10 liter capacity and the solid matter was allowed to be crystallized at 160°C under agitation for 72 hr. The product obtained was separated, washed with water and dried, to obtain zeolite TSZ-821 which is to be used as basic material for the copper-containing zeolite catalyst. Chemical analysis revealed the composition in a molar ratio of oxides on the anhydride basis:

$$1.05\ Na_2O \cdot Al_2O_3 \cdot 23.2\ SiO_2$$

In addition, d values estimated by the powder X-ray diffraction patterns were basically identical with those indicated in Table 1.

Next, in the same procedure as that for synthesis of TSZ-821, fine particles of homogeneous amorphous compounds of aluminosilicate of different $SiO_2$ and $Al_2O_3$ contents were prepared, allowed to crystallize by heating in an aqueous solution of sodium hydroxide under agitation, to obtain zeolites TSZ-841 and TSZ-851 which are basic materials for the copper-containing zeolite catalysts. They are expressed by the following formulae in molar ratios of oxides on the anhydride basis:

TSZ-841: $1.41\ Na_2O \cdot Al_2O_3 \cdot 40.4\ SiO_2$
TSZ-851: $1.65\ Na_2O \cdot Al_2O_3 \cdot 49.8\ SiO_2$

The d values of these zeolites estimated by the powder X-ray diffraction patterns were basically identical with those in Table 1.

Example 2 (Preparation of copper-containing zeolite)

TSZ-821 obtained in Example 1 was taken in an amount of 10 g, mixed with a 0.1 mol/l aqueous solution of copper acetate so as to make the number of copper atoms equal to the number of Al atoms in the zeolite. Ihe mixture was stirred at room temperature, mixed with 2.5 % aqueous $NH_3$ solution, to make pH of the slurry 6.0. Then agitation followed for 12 hr at room temperature. The solid matter was separated, thoroughly washed with water, dried at 100°C for 10 hr. The copper-containing zeolite catalyst thus obtained was designated as TSZ-821-A. The rate of exchanged copper ions of the copper-containing zeolite catalyst as determined by chemical analysis is indicated in Table 2, where divalent copper was assumed to obtain the rate of exchanged copper ions. In addition, ammonia existing in the copper-containing zeolite catalyst was determined by the neutralization titration, of which result expressed in moles per unit atom of Cu is also found in Table 2:

Table 2

| Copper-containing zeolite | Rate of exchanged copper (%) | Cu content (wt%) | $NH_3$ ($NH_3/Cu$) |
|---|---|---|---|
| TSZ-821-A | 124 | 6.37 | 0.51 |

5

Example 3 (Preparation of copper-containing zeolite catalyst)

The TSZ-821 obtained in Example 1 was taken in an amount of 10 g and an aqueous 0.1 mol/l solution of copper acetate was added so that the number of copper atoms is 0.34 times as many as that of Al atoms in the zeolite. The mixture was stirred at room temperature and mixed with a 2.5 % aqueous solution of $NH_3$ to make the pH 10.5 of the resulting slurry. Then agitation was continued at room temperature until the required rate of exchanged copper ions is attained in the zeolite. Solid matter formed was separated, thoroughly washed with water, and dried at 100°C for 10 hr. The copper-containing zeolite obtained was named TSZ-821-B. The rate of exchanged copper ions of the copper-containing zeolite catalyst as estimated by chemical analysis is shown in Table 3. Divalent copper was assumed on the exchange in determining the rate of exchanged copper ions.

Ammonia existing in the copper-containing zeolite catalyst was determined by the neutralization titration, of which result expressed in moles per unit atom of Cu is also found in Table 3:

Example 4 (Preparation of copper-containing zeolite catalyst)

The TSZ-821, TSZ-841 and TSZ-851 obtained in Example 1 were taken each in an amount of 10 g and an aqueous 0.1 mol/l solution of copper acetate was added to each so that the number of copper atoms are equal to that of Al atoms in each zeolite. The mixtures were stirred at room temperature and mixed with a 2.5 % aqueous solution of $NH_3$ to make the pH 10.5 of the resulting slurry. Then agitation was continued at room temperature until the required rate of exchanged copper ions is attained in the zeolite. Solid matter was separated, thoroughly washed with water, and dried at 100°C for 10 hr. The copper-containing zeolites obtained were named TSZ-821-C, TSZ-841-D, and TSZ-851-E, respectively. The rates of exchanged copper ions of the copper-containing zeolites estimated by chemical analysis are shown in Table 3. Divalent copper was assumed on exchange in determining the rate of exchanged copper ions.

Ammonia existing in the copper-containing zeolite catalysts was determined by the neutralization titration, of which result expressed in moles per unit atom of Cu is also found in Table 3:

Table 3

| Copper-containing zeolite | Rate of exchanged copper (%) | Cu content (wt%) | $NH_3$ ($NH_3$/Cu) |
|---|---|---|---|
| TSZ-821-B | 66 | 3.43 | 0.82 |
| TSZ-821-C | 123 | 6.12 | 0.83 |
| TSZ-841-D | 121 | 3.61 | 0.78 |
| TSZ-851-E | 127 | 3.29 | 0.69 |

Example 5 (Test of the decomposition activity for NO of copper-containing zeolite catalyst)

The copper-containing zeolite catalysts prepared in Examples 2, 3 and 4 were press-molded and broken into uniform particles of 177-354$\mu$m (42 to 80 mesh). A normal pressure flow-type fixed bed reaction tube was packed with 1 g of each catalyst. Prior to the reaction, the copper-containing zeolite catalysts were pretreated by elevating the temperature up to 500°C at a speed of 5°C/min in a stream of helium and maintaining the temperature for 2 hr. Helium gas which contained NO in a concentration of 5000 ppm was forced to flow through the packing layer of the copper-containing zeolite catalysts at a flow rate of 15 cc/min to allow reaction. In 50 min of reaction at selected temperatures, the rate of conversion of NO was estimated. Results are shown in Table 4.

# EP 0 311 066 B1

Table 4

| Copper-containing zeolite | TSZ-821-A | TSZ-821-B | TSZ-821-C | TSZ-841-D | TSZ-851-E |
|---|---|---|---|---|---|
| Rate of conversion / Reaction temperature (°C) | Rate of conversion of NO (%) | Rate of conversion of NO (%) | Rate of conversion of NO (%) | Rate of conversion of NO (%) | Rate of conversion of NO (%) |
| 400 | 97.3 | 94.0 | 97.2 | 94.1 | 96.8 |
| 500 | 100 | 100 | 100 | 100 | 80.5 |
| 600 | 100 | 100 | 100 | 100 | 60.3 |

Example 6 (Stability of activity of the copper-containing zeolite catalyst)

Sustaining stability of the activity to decompose NO was tested using the copper-containing zeolite catalyst TSZ-821-C (rate of exchanged copper ions of 123 %). The same apparatus and the same method as in Example 5 were employed and the temperature for reaction 500°C was selected. Time variation of the rate of conversion is shown in Fig. 1.

Comparison Example 1 (Preparation of zeolite for comparison)

The TSZ-821 obtained in Example 1 was taken in an amount of 10 g, mixed with an aqueous 0.1 mol/l solution of copper acetate so thatthe number of copper atoms is equal to that of Al atoms on the zeolite, and stirred for 12 hr at room temperature. Solid matter was separated from the slurry, washed with water and dried at 100°C for 10 hr. The obtained zeolite for comparison was named TSZ-821-F. The rates of exchanged copper ions on the catalysts for comparison which was estimated by chemical analysis is shown in Table 5.

Comparison Example 2 (Preparation of zeolite for comparison)

The TSZ-821 obtained in Example 1 was taken in an amount of 10 g, mixed with an aqueous 0.1 mol/l solution of copper acetate so that the number of copper atoms is equal to that of Al atoms in the zeolite, and stirred for 12 hr at room temperature. Solid matter was separated from the slurry and washed with water. After additional 2 time repetition of the procedure, the solid was dried at 100°C for 10 hr.
The obtained zeolite for comparison was named TSZ-821-G. The rate of exchanged copper ions on the catalysts for comparison, estimated by the chemical analysis, is found in Table 5.

Comparison Example 3 (Preparation of zeolite for comparison)

The TSZ-821 obtained in Example 1 was taken in an amount of 10 g, mixed with an aqueous 0.1 mol/l solution of copper(II) chloride so that the number of copper atoms is equal to that of Al atoms in the zeolite, and stirred for 12 hr at room temperature. Solid matter was separated from the slurry, washed with water

7

EP 0 311 066 B1

and dried at 100°C for 10 hr. The obtained zeolite for comparison was named TSZ-821-H. The rates of exchanged copper ions on the catalyst for comparison estimated by chemical analysis is shown in Table 5.

Comparison Example 4 (Preparation of zeolite for comparison)

The TSZ-821 obtained in Example 1 was taken in an amount of 10 g, mixed with an aqueous 0.1 mol/l solution of copper(li) chloride so that the number of copper atoms is equal to that of Al atoms on the zeolite, and stirred for 12 hr at room temperature. Solid matter was separated from the slurry and washed with water. After additional 2 time repetition of the procedure, the solid was dried at 100°C for 10 hr.

The obtained zeolite for comparison was named TSZ-821-I. The rate of exchanged copper ions on the catalysts for comparison, estimated by the chemical analysis, is also found in Table 5.

Table 5

| Zeolite for comparison | Rate of exchanged copper ion (%) | Copper content (wt%) |
|---|---|---|
| TSZ-821-F | 88 | 4.43 |
| TSZ-821-G | 103 | 5.26 |
| TSZ-821-H | 88 | 4.50 |
| TSZ-821-I | 104 | 5.33 |

Comparison Example 5 (Test of activity for decomposing NO of zeolite for comparison)

The rate of conversion of NO was estimated according to the method in Example 5 with the zeolites for comparison prepared in Comparison Examples 1, 2, 3 and 4. Results are shown in Table 6.

Table 6

| Zeolite for comparison | TSZ-821-F | TSZ-821-G | TSZ-821-H | TSZ-821-I |
|---|---|---|---|---|
| Rate of conversion / Reaction temperature (°C) | Rate of conversion of NO (%) | Rate of conversion of NO (%) | Rate of conversion of NO (%) | Rate of conversion of NO (%) |
| 400 | 60.0 | 70.0 | 61.5 | 65.0 |
| 500 | 55.2 | 67.5 | 58.0 | 59.8 |
| 600 | 38.8 | 52.3 | 39.0 | 47.0 |

Comparison Example 6 (Preparation of zeolite for comparison)

The TSZ-821, TSZ-841 and TSZ-851 obtained in Example 1 were taken in an amount of 10 g each,

8

mixed with an aqueous 0.1 mol/l solution of copper acetate so that the number of copper atoms is equal to that of Al atoms on the zeolites, and stirred for 12 hr at room temperature. Solid matter was separated from the slurry and washed with water. This procedure was repeated 3 times and the product was dried at 100°C for 10 hr. The obtained zeolites for comparison were named TSZ-821-J, TSZ-841-K and TSZ-851-L, respectively. The rates of exchanged copper ions on the catalysts for comparison which were estimated by chemical analysis are shown in Table 7.

Table 7

| Zeolite for comparison | Rate of exchanged copper ion (%) | Copper content (wt%) |
|---|---|---|
| TSZ-821-J | 112 | 5.67 |
| TSZ-841-K | 108 | 3.31 |
| TSZ-851-L | 118 | 3.16 |

Comparison Example 7 (Test of activity for decomposing NO of zeolites for comparison)

The rate of conversion of NO was estimated with the zeolites for comparison prepared in Comparison Example 6, according to the method in Example 5. Results are found in Table 8.

Table 8

| Zeolite for comparison | TSZ-821-J | TSZ-841-K | TSZ-851-L |
|---|---|---|---|
| Rate of conversion / Reaction temperature (°C) | Rate of conversion of NO (%) | Rate of conversion of NO (%) | Rate of conversion of NO (%) |
| 400 | 70.8 | 37.9 | 31.0 |
| 500 | 69.0 | 39.3 | 27.0 |
| 600 | 54.9 | 28.8 | 17.0 |

Comparison Example 8 (Preparation of zeolite for comparison)

The TSZ-821 obtained in Example 1 was taken in an amount of 10 g, mixed with an aqueous 0.10 mol/l solution of copper(II) chloride. The mixture was stirred for 3 hr at a refluxing temperature. Solid matter was separated and washed. After 3 time repetition of the procedure, the product was dried at 100°C for 10 hr. The zeolite for comparison thus obtained was named TSZ-821-M. The rate of exchanged copper ions as estimated by the chemical analysis is shown in Table 9.

Table 9

| Zeolite for comparison | Rate of exchanged copper ion (%) | Copper content (wt%) |
|---|---|---|
| TSZ-821-M | 167 | 6.38 |

Comparison Example 9 (Test of activity of decomposing NO of zeolite for comparison)

The rate of conversion of NO was estimated by the method described in Example 5 with the zeolite for comparison prepared in Comparison Example 8. Results are shown in Table 10.

Table 10

| Zeolite for comparison | TSZ-821-M |
|---|---|
| Reaction temperature (°C) / Rate of conversion | Rate of conversion of NO (%) |
| 400 | 76.8 |
| 500 | 70.5 |
| 600 | 62.0 |

Example 7 (Production of zeolite molding)

With 100 parts of zeolite prepared in Example 1, 20 parts of bole clay was mixed and thoroughly kneaded with a kneader. The starting mixture thus prepared was formed in cylinders of 1.5 mm diameter with an extrusion molder and the cylindrical moldings were dried at 100°C for 10 hr. Baking the above products at 650°C for 1 hr gave zeolite moldings. Their chemical composition can be expressed by molar ratios of oxides on the anhydride basis as follows:

TSZ-821 molding: 0.78 $Na_2O \cdot Al_2O_3 \cdot 16.4 SiO_2$

The d values of the TSZ-821 molding as estimated by the powder X-ray diffraction pattern were basically identical with those in Table 1.

Example 8 (Preparation of copper-containing zeolite molding)

The molding of TSZ-821 produced in Example 7 was taken in an amount of 10 g and immersed in an aqueous 0.1 mol/l solution of copper acetate so that the number of copper atoms is equal to that of Al atoms on the zeolite. The mixture was stirred at room temperature, and mixed with an aqueous 2.5 %

solution of NH$_3$ so as to make the pH of the slurry to be 10.5.

Then stirring continued at room temperature for 12 hr. Solid matter was separated, thoroughly washed with water, and dried at 100°C for 10 hr. The copper ion content of the copper-containing zeolite molding (designated as TSZ-821-molding-A) as estimated by chemical analysis is shown in Table 11.

Table 11

| Copper-containing zeolite molding | Copper content (wt%) |
| --- | --- |
| TSZ-821-molding-A | 5.17 |

Example 9 (Test of activity for decomposing NO of the copper-containing zeolite molding)

The copper-containing zeolite molding (TSZ-821-molding-A) prepared in Example 8 was grounded in a mortar to obtain particles of 177-354μm (42 to 80 mesh). Then a normal pressure flow-type fixed bed reaction tube was packed with 1 g of the particles. Prior to the reaction, the copper-containing zeolite molding was heated up to 500°C with an elevation speed of 5°C/min and the final temperature was maintained for 2 hr with passage of helium gas. A helium gas containing 5000 ppm of NO was passed through the layer packed with the copper-containing zeolite molding at a speed of 15 cc/min to allow reaction. In 50 min of the reaction, the rate of conversion of NO was estimated at each temperature of reaction. Results are found in Table 12.

Table 12

| Copper-containing zeolite molding | TSZ-821-molding-A |
| --- | --- |
| Rate of conversion / Reaction temperature (°C) | Conversion rate of NO (%) |
| 400 | 100 |
| 500 | 100 |
| 600 | 100 |

Example 10 (Stability of activity of the copper-containing zeolite molding)

The sustaining stability of the decomposing activity for NO was tested using TSZ-821-molding-A containing copper. The same apparatus and the same method as in Example 9 were employed and the reaction was carried out at 500°C. Time variation of the rate of conversion is shown in Fig. 2.

Comparison Example 10 (Preparation of zeolite for comparison)

11

The TSZ-821 molding obtained in Example 7 was taken in an amount of 10 g and mixed with an aqueous 0.1 mol/l solution of copper(II) chloride so that the number of copper atoms is equal to that of Al atoms in the zeolite, and the mixture was stirred at room temperature. Solid matter was separated from the slurry and washed. After 3 time repetition of the procedure. the solid was dried at 100°C for 10 hr. Copper content of the zeolite for comparison (designated as TSZ-821-molding-B) obtained by the chemical analysis is shown in Table 13.

Table 13

| Zeolite for comparison | Copper content (wt%) |
|---|---|
| TSZ-821-molding-B | 5.46 |

Comparison Example 11 (Test of activity for decomposing NO for zeolite for comparison)

The rate of conversion of NO was determined with the zeolite for comparison (TSZ-821-molding-B) prepared in Comparison Example 10 by the method in Example 9. Results are found in Table 14.

Table 14

| Zeolite for comparison | TSZ-821-molding-B |
|---|---|
| Reaction temperature (°C) / Rate of conversion | Rate of conversion of NO (%) |
| 400 | 44.8 |
| 500 | 21.2 |
| 600 | 9.5 |

**Claims**

1. Process for producing a copper-containing zeolite, comprising:
   subjecting a zeolite having the lattice spacings (d values) indicated in Table 1 as estimated by the powder X-ray diffraction

| Lattice spacing (d value) | Relative strength | Lattice spacing (d value) | Relative strength |
|---|---|---|---|
| 11.1 ± 0.3 | strong | 4.60 ± 0.08 | weak |
| 10.0 ± 0.3 | strong | 4.25 ± 0.08 | weak |
| 7.4 ± 0.2 | weak | 3.85 ± 0.07 | very strong |
| 7.1 ± 0.2 | weak | 3.71 ± 0.05 | strong |
| 6.3 ± 0.2 | weak | 3.04 ± 0.03 | weak |
| 6.04 ± 0.2 | weak | 2.99 ± 0.02 | weak |
| 5.56 ± 0.1 | weak | 2.94 ± 0.02 | weak |
| 5.01 ± 0.1 | weak | | |

to ion exchange with copper ions in an aqueous solution containing a water soluble copper salt and ammonia.

2. Process according to Claim 1, in which said zeolite is a molding.

3. Process according to Claim 1 or Claim 2, in which said zeolite is in the form of a slurry having a pH value in the range from 4 to 12.

4. Process for catalytic decomposition of nitrogen oxides for removal of the nitrogen oxides from a gas which contains said nitrogen oxides comprising:
   bringing said gas containing nitrogen oxides into contact with a copper-containing zeolite prepared by subjecting a zeolite having the lattice spacings (d values) indicated in Table 1 as estimated by the powder X-ray diffraction to ion exchange with copper ions in an aqueous solution containing a water soluble copper salt and ammonia.

5. A copper-containing zeolite, produced by a process which comprises:
   subjecting a zeolite having lattice spacings (d values) as indicated in the following Table as determined by powder X-ray diffraction to ion exchange with copper ions in an aqueous solution containing a water-soluble copper salt and ammonia:

| Lattice spacing (d value) | Relative strength | Lattice spacing (d value) | Relative strength |
|---|---|---|---|
| 11.1 ± 0.3 | strong | 4.60 ± 0.08 | weak |
| 10.0 ± 0.3 | strong | 4.25 ± 0.08 | weak |
| 7.4 ± 0.2 | weak | 3.85 ± 0.07 | very strong |
| 7.1 ± 0.2 | weak | 3.71 ± 0.05 | strong |
| 6.3 ± 0.2 | weak | 3.04 ± 0.03 | weak |
| 6.04 ± 0.2 | weak | 2.99 ± 0.02 | weak |
| 5.56 ± 0.1 | weak | 2.94 ± 0.02 | weak |
| 5.01 ± 0.1 | weak | | |

6. The copper-containing zeolite according to Claim 5, wherein the zeolite subjected to ion exchange with copper ions has a ratio in moles of $SiO_2$ to $Al_2O_3$ of about 15 to 300.

7. The copper-containing zeolite according to Claim 5, wherein the water-soluble copper salt is selected from the group consisting of the sulfate, chloride, acetate and nitrate salts of copper.

8. The copper-containing zeolite according to Claim 5, wherein said ammonia is added in the form of ammonia water, hydrous ammonia compounds and aqueous solutions containing dissolved ammonia, and in an amount such that the mixture of the zeolite, water-soluble copper compound and ammonia has a pH of about 4 to 12.

9. The copper-containing zeolite according to Claim 5, which has a copper content of greater than 0.03%

10. The copper-containing zeolite according to Claim 5, which is in the form of a molding which further comprises a clay binder in the amount of 5 to 30 parts of binder per 100 parts of zeolite.

**Revendications**

1. Procédé de production d'une zéolite contenant du cuivre, comprenant :
l'application à une zéolite présentant les distances réticulaires (valeurs de d) indiquées dans le Tableau 1, estimées par la diffraction des rayons X de la poudre,

| Distance réticulaire (valeur de d) | Force relative | Distance réticulaire (valeur de d) | Force relative |
|---|---|---|---|
| 11,1 ± 0,3 | forte | 4,60 ± 0,08 | faible |
| 10,0 ± 0,3 | forte | 4,25 ± 0,08 | faible |
| 7,4 ± 0,2 | faible | 3,85 ± 0,07 | très forte |
| 7,1 ± 0,2 | faible | 3,71 ± 0,05 | forte |
| 6,3 ± 0,2 | faible | 3,04 ± 0,03 | faible |
| 6,04 ± 0,2 | faible | 2,99 ± 0,02 | faible |
| 5,56 ± 0,1 | faible | 2,94 ± 0,02 | faible |
| 5,01 ± 0,1 | faible | | |

à un échange d'ions avec des ions cuivre dans une solution aqueuse contenant un sel de cuivre soluble dans l'eau et de l'ammoniac.

2. Procédé selon la revendication 1, dans lequel la zéolite est un moulage.

3. Procédé selon la revendication 1 ou la revendication 2, dans lequel la zéolite est sous forme d'une bouillie présentant un pH compris entre 4 et 12.

4. Procédé de décomposition catalytique d'oxydes d'azote pour éliminer les oxydes d'azote d'un gaz qui contient ces oxydes d'azote comprenant :
la mise en contact du gaz contenant des oxydes d'azote avec une zéolite contenant du cuivre préparée en soumettant une zéolite présentant les distances réticulaires (valeurs de d) indiquées dans le Tableau 1, estimées par la diffraction des rayons X de la poudre, à un échange d'ions avec des ions cuivre dans une solution aqueuse contenant un sel de cuivre soluble dans l'eau et de l'ammoniac.

5. Zéolite contenant du cuivre, produite par un procédé qui comprend :
l'application à une zéolite présentant des distances réticulaires (valeurs de d) telles qu'on les a indiquées dans le Tableau suivant, déterminées par la diffraction des rayons X de la poudre, d'un échange d'ions avec des ions cuivre dans une solution aqueuse contenant un sel de cuivre soluble dans l'eau et de l'ammoniac:

| Distance réticulaire (valeur de d) | Force relative | Distance réticulaire (valeur de d) | Force relative |
|---|---|---|---|
| 11,1 ± 0,3 | forte | 4,60 ± 0,08 | faible |
| 10,0 ± 0,3 | forte | 4,25 ± 0,08 | faible |
| 7,4 ± 0,2 | faible | 3,85 ± 0,07 | très forte |
| 7,1 ± 0,2 | faible | 3,71 ± 0,05 | forte |
| 6,3 ± 0,2 | faible | 3,04 ± 0,03 | faible |
| 6,04 ± 0,2 | faible | 2,99 ± 0,02 | faible |
| 5,56 ± 0,1 | faible | 2,94 ± 0,02 | faible |
| 5,01 ± 0,1 | faible | | |

6. Zéolite contenant du cuivre selon la revendication 5, dans laquelle la zéolite soumise à un échange d'ions avec des ions cuivre présente un rapport en moles de $SiO_2$ à $Al_2O_3$ d'environ 15 à 300.

7. Zéolite contenant du cuivre selon la revendication 5, dans laquelle le sel de cuivre soluble dans l'eau est choisi dans le groupe constitué par des sels sulfate, chlorure, acétate et nitrate de cuivre.

8. Zéolite contenant du cuivre selon la revendication 5, dans laquelle on ajoute l'ammoniac sous forme de solution aqueuse ammoniacale, de combinaisons ammoniacales hydratées et de solutions aqueuses contenant de l'ammoniac dissous et en une quantité telle que le mélange de la zéolite, du composé de cuivre soluble dans l'eau et de l'ammoniac présente un pH d'environ 4 à 12.

9. Zéolite contenant du cuivre selon la revendication 5, qui présente une teneur en cuivre supérieure à 0,03 %.

10. Zéolite contenant du cuivre selon la revendication 5, qui se trouve sous forme d'un moulage qui comprend, en outre, un liant d'argile en une quantité de 5 à 30 parties de liant pour 100 parties de zéolite.

**Patentansprüche**

1. Verfahren zur Herstellung eines Kupfer enthaltenden Zeolits, dadurch gekennzeichnet, daß man einen Zeolit mit den in Tabelle 1 als Schätzung aus der Pulver-Röntgenbeugung angegebenen Gitterabständen (d-Werten)

| Gitterabstand (d-Wert) | Relative Stärke | Gitterabstand (d-Wert) | Relative Stärke |
|---|---|---|---|
| 11.1 ± 0.3 | stark | 4.60 ± 0.08 | schwach |
| 10.0 ± 0.3 | stark | 4.25 ± 0.08 | schwach |
| 7.4 ± 0.2 | schwach | 3.85 ± 0.07 | sehr stark |
| 7.1 ± 0.2 | schwach | 3.71 ± 0.05 | stark |
| 6.3 ± 0.2 | schwach | 3.04 ± 0.03 | schwach |
| 6.04 ± 0.2 | schwach | 2.99 ± 0.02 | schwach |
| 5.56 ± 0.1 | schwach | 2.94 ± 0.02 | schwach |
| 5.01 ± 0.1 | schwach | | |

einem Ionenaustausch mit Kupferionen in einer wäßrigen Lösung unterwirft, die ein wasserlösliches Ammoniak enthält.

2. Verfahren nach Anspruch 1, dadurch gekennzeichnet, daß der erwähnte Zeolit ein Formteil ist.

3. Verfahren nach Anspruch 1 oder 2, dadurch gekennzeichnet, daß der erwähnte Zeolit in Form einer Aufschlämmung mit einem pH-Wert im Bereich von 4 bis 12 vorliegt.

4. Verfahren zur katalytischen Zersetzung von Stickoxiden zur Entfernung der Stickoxide von einem Gas, das die Stickoxide enthält, dadurch gekennzeichnet, daß man das Stickoxide enthaltende Gas in Kontakt mit einem Kupfer enthaltenden Zeolit bringt, der dadurch hergestellt wurde, daß man einen Zeolit mit den in Tabelle 1 als Schätzung aus der Pulver-Röntgenstreuung angegebenen Gitterabständen (d-Werten) einem Ionenaustausch mit Kupferionen in einer wäßrigen Lösung unterwirft, die ein wasserlösliches Kupfersalz und Ammoniak enthält.

5. Kupfer enthaltender Zeolit, hergestellt durch ein Verfahren, bei dem man einen Zeolit mit den in der folgenden Tabelle angegebenen, durch Pulver-Röntgenbeugung bestimmten Gitterabständen (d-Werten), einem Ionenaustausch mit Kupferionen in einer wäßrigen Lösung unterwirft, die ein wasserlösliches Kupfersalz und Ammoniak enthält.

| Gitterabstand (d-Wert) | Relative Stärke | Gitterabstand (d-Wert) | Relative Stärke |
|---|---|---|---|
| 11.1 ± 0.3 | stark | 4.60 ± 0.08 | schwach |
| 10.0 ± 0.3 | stark | 4.25 ± 0.08 | schwach |
| 7.4 ± 0.2 | schwach | 3.85 ± 0.07 | sehr stark |
| 7.1 ± 0.2 | schwach | 3.71 ± 0.05 | stark |
| 6.3 ± 0.2 | schwach | 3.04 ± 0.03 | schwach |
| 6.04 ± 0.2 | schwach | 2.99 ± 0.02 | schwach |
| 5.56 ± 0.1 | schwach | 2.94 ± 0.02 | schwach |
| 5.01 ± 0.1 | schwach | | |

6. Kupfer enthaltender Zeolit nach Anspruch 5, dadurch gekennzeichnet, daß der einem Ionenaustausch mit Kupferionen unterworfene Zeolit ein Molverhältnis von $SiO_2$ zu $Al_2O_3$ von ungefähr 15 zu 300 aufweist.

7. Kupfer enthaltender Zeolit nach Anspruch 5, dadurch gekennzeichnet, daß das wasserlösliche Kupfersalz aus der Gruppe der Sulfat-, Chlorid-, Acetat- und Nitratsalze des Kupfers gewählt wurde.

8. Kupfer enthaltender Zeolit nach Anspruch 5, dadurch gekennzeichnet, daß Ammoniak in Form von wäßriger Ammoniaklösung, wasserhaltigen Ammoniakverbindungen und wäßrigen Lösungen, die gelösten Ammoniak enthalten und in einer solchen Menge zugegeben wird, daß die Mischung aus dem Zeolit der wasserlöslichen Kupferverbindung und dem Ammoniak einen pH-Wert von etwa 4 bis 12 hat.

9. Kupfer enthaltender Zeolit nach Anspruch 5, dadurch gekennzeichnet, daß der Kupfergehalt größer als 0,03 % ist.

10. Kupfer enthaltender Zeolit nach Anspruch 5 in Form eines Formteils, das zusätzlich einen Ton als Bindemittel in einer Menge von 5 bis 30 Teilen Bindemittel pro 100 Teile Zeolit enthält.

16

# FIG.1

# FIG.2